# EUROPEAN PATENT APPLICATION

(11) **EP 0 646 336 A1**
(43) Date of publication of application: **05.04.1995**
(21) Application number: 94114609.4
(22) Date of filing: 16.09.1994
(51) Int. Cl.: A44B 11/25, B60R 22/30, B60R 22/10

(54) **Harness retainer**

(30) Priority: 01.10.1993 US 130210
(71) Applicant: COSCO, INC., Columbus Indiana 47201 (US)
(72) Inventor: Gerken, Donald L., Columbus, Indiana 47201 (US)
(74) Representative: Leiser, Gottfried, Dipl.-Ing.

(57) **Abstract**

A two-piece harness retainer (30) includes a latch member (44) carrying a first harness strap (32) and a latch-retaining member (46) that carries a second harness strap (34) and is connectable to and disconnectable from latch member (44). Latch member (44) includes a first plate (48) and a latching post (58) appended to first plate (48). First plate (48) includes first strap guides (54, 56) for slidably receiving a first harness strap (32) to enable latch member (44) to carry first harness strap (32). Latch-retaining member (46) includes a second plate (68) including second strap guides (74, 76) for slidably receiving a second harness strap (34) to enable latch-retaining member (46) to carry second harness strap (34). A post-retainer (78) releasably retains latching post (58) to couple first plate (48) to second plate (68) so that first and second strap guides (54, 56) and (74, 76) are positioned in spaced-apart relation on opposite sides of latching post (58).

## Description

### Background and Summary of the Invention

The present invention relates to harness retainers and, in particular, to a harness retainer for use with a child car seat. More particularly, the present invention relates to a snap-together, two-piece harness retainer.

Harness retainers hold shoulder straps together so that the straps lie properly on a person wearing a harness assembly including the shoulder straps. Typically, harness assemblies and harness retainers are used to restrain a child seated in a child car seat as a safety precaution.

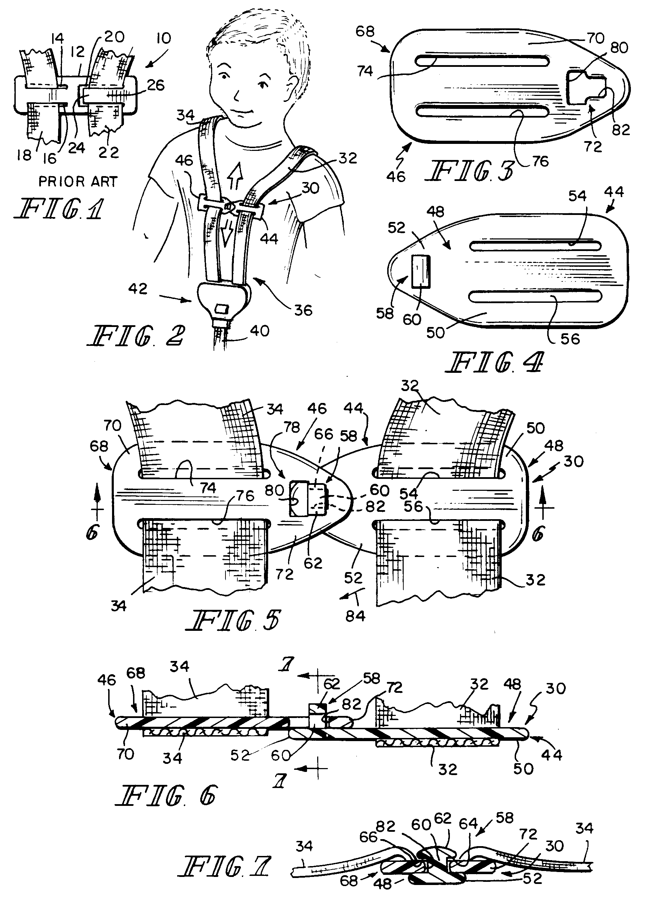

A conventional harness retainer 10 is illustrated in Fig. 1. Harness retainer 10 includes a single plate 12 formed to include a first pair of slots 14, 16 for receiving a left-side shoulder strap 18 and a U-shaped slot 20 for receiving a right-side shoulder strap 22. Although left-side shoulder strap 18 always remains connected to harness retainer 10, right-side shoulder strap 22 is typically disconnected from harness retainer 10 each time a child is removed from a child car seat (not shown) carrying shoulder straps 18, 22 by lifting up on the free end 24 of the cantilevered bendable strap-retaining lever 26 to "unlace" the right-side shoulder strap 22 to that it can be removed from the U-shaped slot 20. Later, when the child is returned to the child car seat and the shoulder straps 18, 22 are placed about the child's shoulders, it is necessary to again lift up on lever 26 and insert the right-side shoulder strap into the U-shaped slot to lie under the resilient lever 26.

It has been observed that the above-described strap lacing and unlacing activity is cumbersome and not always easily accomplished during the harnessing and unharnessing of an active child. What is needed is a harness retainer that is operable to hold two shoulder straps in side-by-side relation at a point adjacent to an upper body portion of the child without requiring a user to disconnect a shoulder strap from the harness retainer each time a child is unharnessed.

According to the present invention, a harness retainer is a two-piece assembly and includes a latch member and a latch-retaining member that is connectable to and disconnectable from the latch member. The latch member carries a first harness strap and the latch-retaining member carries a second harness strap.

The latch member includes a first plate and a latching post appended to the first plate. The first plate includes first strap guide means for slidably receiving a first harness strap to enable the latch member to carry the first harness strap.

The latch-retaining member includes a second plate. The second plate includes second strap guide means for slidably receiving a second harness strap to enable the latch-retaining member to carry the second harness strap. The second plate also includes post-retaining means for releasably retaining the latching post to couple the first plate to the second plate so that the first and second strap guide means are positioned in spaced-apart relation on opposite sides of the latching post.

In preferred embodiments, each plate is somewhat arrowhead-shaped and includes a body portion formed to include a pair of strap-receiving slots defining the strap guide means. The first plate also includes a nose portion carrying the latching post and the second plate includes a nose portion formed to include the post-retaining means.

Illustratively, the latching post is T-shaped and includes an upright neck appended to the first plate and an enlarged head appended to the upright neck. The post-retaining means is defined by a T-shaped aperture formed in the nose portion of the second plate.

To connect the latch member carrying the first harness strap to the latch-retaining member carrying the second harness strap, a user first brings the nose portions of the first and second plates together and then inserts the enlarged head of the latching post into a head-receiving channel in the T-shaped aperture. The connection is then completed by moving the latching post in the T-shaped aperture until the upright neck passes into a neck-receiving channel in the T-shaped aperture and the second plate is "caught" between the enlarged head of the latching post and the first plate.

To disconnect the latch member and latch-retaining member and thereby separate the first and second harness straps, it is only necessary to move the first plate relative to the second plate until the latching post on the first plate leaves the neck-receiving channel and is free to exit the T-shaped aperture formed in the second plate through the head-receiving channel. Advantageously, it is always possible to connect and disconnect the two harness retainer plates without ever having to remove a harness strap from one of the harness plates. This two-piece harness retainer snaps together easily to hold a first harness strap attached to one of the harness retainer plates in side-by-side relation to a second harness strap attached to the other of the harness retainer plates.

Additional features and advantages of the invention will become apparent to those skilled in the art upon consideration of the following detailed description of a preferred embodiment of the invention as presently perceived.

### Brief Description of the Drawings

The detailed description particularly refers to the accompanying figures in which:
Fig. 1 is a plan view of a prior art one-piece harness retainer connected to two harness straps;
Fig. 2 is a view of a child wearing a harness including a two-piece harness retainer in accordance with the present invention showing a latch member attached to the strap on the child's left shoulder and a latch-retaining member attached to the strap on the child's right shoulder;
Fig. 3 is a plan view of the latch-retaining member shown in Fig. 2 showing a nose portion formed to include a T-shaped latch post-receiving aperture;
Fig. 4 is a plan view of the latch member shown in Fig. 2 showing a nose portion carrying a latch post;
Fig. 5 is an enlarged plan view of the harness retainer shown in Fig. 2;
Fig. 6 is a sectional view taken along line 6-6 of Fig. 5 showing engagement of the latching post in a neck-receiving channel provided at one end of the T-shaped latch post-receiving aperture; and
Fig. 7 is a sectional view taken along line 7-7 of Fig. 6 showing the T-shaped latching post and its upright neck and enlarged head.

### Detailed Description of the Drawings

As shown in Fig. 2, a two-piece harness retainer 30 is used to hold first and second straps 32, 34 in harness assembly 36 in side-by-side relation at a ponit adjacent the upper body of a child 38 seated in a child car seat (now shown). Illustratively, harness assembly also includes a crotch strap 40 and a buckle assembly 42 interconnecting shoulder straps 32, 34 and crotch strap 40.

The two-piece harness retainer 30 includes a latch member 44 and a separate latch-retaining member 46. Preferably, each member is a molded plastic part and adapted for use with a wide variety of harnesses, including a child-restraining harness of the type used with child car seats or the like.

The latch member 44 includes a first plate 48 having a rectangular-shaped body portion 50 and an integral triangular-shaped nose portion 52 as shown in Fig. 4. The body portion 50 is formed to include two elongated spaced-apart parallel slots 54, 56 which are sized to receive first shoulder strap 32 as shown best in Fig. 5. These two slots 54, 56 are oriented to extend along the length of the first plate 48 and are sized to permit sliding movement of the strap 32 in the slots 54, 46. This helps a user adjust the position of the latch member 44 along the length of strap 32 by sliding the latch member 44 back and forth along the length of the strap 32.

A latching post 58 is appended to the nose portion 52 of latch member 44. latching post 58 is T-shaped as shown best in Figs. 6 and 7 and includes a narrow upright neck 60 appended to the first plate 48 and an enlarged head 62 appended to an outer end of upright neck 60. Illustratively, the latching post 58 is formed during molding of latch member 44 to be connected integrally to first plate 48. Once formed, the enlarged head 62 includes flanges 64, 66 on opposite sides of the upright neck 60 as shown best in Figs. 5 and 7.

The latch-retaining member 46 includes a second plate 68 having a rectangular-shaped body portion 70 and an integral triangular-shaped nose portion 72 as shown in Fig. 3. The body portion 70 is formed to include two elongated spaced-apart parallel slots 74, 76 which are sized to receive second shoulder straps 34 as shown best in Fig. 5. These two slots 74, 76 are oriented to extend along the length of the second plate 68 and are sized to permit sliding movement of the strap 34 in the slots 74, 76.

A latching post-receiving aperture 78 is formed in the nose portion 72 of latch-retaining member 46, as shown best in Fig. 3. Illustratively, the latching post-receiving aperture 78 is T-shaped and includes a vertical head-receiving channel 80 and a horizontal neck-receiving channel 82 communicating with the head-receiving channel 80. As shown in Fig. 3, the head-receiving channel 80 is oriented to extend transverse to the length of second plate 68 and lie in perpendicular relation to the elongated slots 74, 76. Also, the neck-receiving channel 82 is oriented to lie perpendicular to the transverse head-receiving channel 80 and parallel to the elongated slots 74, 76.

To disconnect the two harness retainer members 44, 46 from the interlocked position shown in Fig. 5, it is only necessary to move the first plate 48 in direction 84 toward the second plate 68 to move latching post neck 60 out of the neck-receiving channel 82 of T-shaped aperture 78 into the transverse head-receiving channel 80 of T-shaped aperture 78. This disengages the flanges 64, 66 on enlarged head 62 from engagement with the nose portion 72 of second plate 68. The latch member 44 can now be moved away from latch-retaining member 46 by withdrawing the latching post 58 from the head-receiving channel 80 of the T-shaped aperture. Advantageously, it is not necessary to remove strap 32 from latch member 44 to disconnect the harness retainer members 44, 46 and thereby separate the two harness straps 32, 34.

The above-described process is merely reversed to enable a user to couple the latch member 44 to the latch-retaining member 46 yet allow for later separation of the harness retainer members 44, 46. Conveniently, the enlarged head 60 is sized to pass freely into and out of the slightly larger head-receiving channel 80. However, the head 60 and its flanges 64, 66 limit removal of latching post 78 from the neck-receiving channel 82 to sliding movement of latching post 78 relative to latch-retaining member 46 in direction 84 noted in Fig. 5.

Although the invention has been described in detail with reference to certain preferred embodiments, variations and modifications exist within the scope and spirit of the invention as described and defined in the following claims.

## Claims

1. A two-piece harness retainer for holding a pair of harness straps in side-by-side relation, the harness retainer comprising
a latch member including a first plate and a latching post appended to the first plate, the first plate including first strap guide means for slidably receiving a first harness strap, and
a latch-retaining member including a second plate, the second plate including second strap guide means for slidably receiving a second harness strap and means for releasably retaining the latching post to couple the first plate to the second plate so that the first and second strap guide means are positioned in spaced-apart relation on opposite sides of the latching post.

2. The harness retainer of claim 1, wherein the latching post is T-shaped and includes an upright neck appended to the first plate and an enlarged head appended to the upright neck and positioned to lie in spaced-apart relation to the first plate.

3. The harness retainer of claim 2, wherein the retaining means is a post-receiving aperture formed in the second plate.

4. The harness retainer of claim 3, wherein the second plate is formed to include at least one elongated strap-receiving slot defining the second strap guide means and the post-receiving aperture is positioned in spaced-apart relation to the elongated strap-receiving slot.

5. The harness retainer of claim 2, wherein the retaining means is a T-shaped aperture formed in the second plate.

6. The harness retainer of claim 2, wherein the retaining means includes first aperture means for receiving the enlarged head of the T-shaped latching post during coupling of the first and second plates and second aperture means communicating with the first aperture means for receiving the upright neck of the T-shaped latching post following insertion of the enlarged head into the first aperture means so that the enlarged head engages the second plate while the upright neck is in the second aperture means to retain the first and second plates in coupled relation.

7. The harness retainer of claim 6, wherein the second plate is formed to include at least one elongated slot defining the second strap guide means and the first aperture means is situated to lie between the at least one elongated slot and the second aperture means.

8. The harness retainer of claim 1, wherein the first plate is formed to include at least one first elongated strap-receiving slot defining the first strap guide means and lying adjacent to the latching post and the second plate is formed to include at least one second elongated strap-receiving slot defining the second strap guide means and the retaining means is a post-receiving aperture formed in the second plate.

9. The harness retainer of claim 8, wherein the post-receiving aperture is arranged to lie in spaced-apart relation to the at least one second elongated strap-receiving slot.

10. The harness retainer of claim 8, wherein the post-receiving aperture is positioned to lie between the at least one first elongated strap-receiving slot and the at least one second elongated strap-receiving slot upon mating engagement of the latching post and the second plate.

11. A two-piece harness retainer for holding a pair of harness straps in side-by-side relation, the harness retainer comprising
a latch member including a first plate and a T-shaped latching post appended to the first plate, the first plate being formed to include two spaced-apart first elongated strap-receiving slots, the T-shaped latching post including an upright neck appended to the first plate and an enlarged head appended to the upright neck and positioned to lie in spaced-apart relation to the first plate, and
a latch-retaining member including a second plate, the second plate being formed to include two spaced-apart second elongated strap-receiving slots, an enlarged head-receiving aperture lying in spaced-apart relation to the two second elongated strap-receiving slots, and an upright neck-receiving aperture communicating with the enlarged head-receiving aperture.

12. The harness retainer of claim 11, wherein the enlarged head-receiving aperture is a third elongated slot lying in perpendicular relation to the two second elongated strap-receiving slots and the upright neck-receiving aperture is a fourth elongated slot lying in perpendicular relation to the third elongated slot.

13. A harness assembly comprising
a first harness strap,
a second harness strap,
a latch member including a first plate and a latching post appended to the first plate, the first plate including first strap guide means for slidably receiving the first harness strap, and
a latch-retaining member including a second plate, the second plate including means for releasably retaining the latching post to couple the first plate to the second plate and second strap guide means for slidably receiving the second harness strap to hold the first and second harness straps in side-by-side spaced-apart relation on opposite sides of the latching post upon connection of the latching post on the first plate to the retaining means on the second plate.

14. The harness assembly of claim 13, wherein the latching post is T-shaped and includes an upright neck appended to the first plate and an enlarged head appended to the upright neck and positioned to lie in spaced-apart relation to the first plate.

15. The harness assembly of claim 14, wherein the retaining means is a post-receiving aperture formed in the second plate.

16. The harness assembly of claim 15, wherein the second plate is formed to include at least one elongated strap-receiving slot defining the second strap guide means and the post-receiving aperture is positioned in spaced-apart relation to the elongated strap-receiving slot.

17. The harness retainer of claim 14, wherein the retaining means is a T-shaped aperture formed in the second plate.

18. The harness retainer of claim 14, wherein the retaining means includes first aperture means for receiving the enlarged head of the T-shaped latching post during coupling of the first and second plates and second aperture means communicating with the first aperture means for receiving the upright neck of the T-shaped latching post following insertion of the enlarged head into the first aperture means so that the enlarged head engages the second plate while the upright neck is in the second aperture means to retain the first and second plates in coupled relation.

19. The harness retainer of claim 18, wherein the second plate is formed to include at least one elongated slot defining the second strap guide means and the first aperture means is situated to lie between the at least one elongated slot and the second aperture means.

20. The harness retainer of claim 13, wherein the first plate is formed to include at least one first elongated strap-receiving slot defining the first strap guide means and lying adjacent to the latching post and the second plate is formed to include at least one second elongated strap-receiving slot defining the second strap guide means and the retaining means is a post-receiving aperture formed in the second plate.

21. The harness retainer of claim 20, wherein the post-receiving aperture is arranged to lie in spaced-apart relation to the at least one second elongated strap-receiving slot.

22. The harness retainer of claim 20, wherein the post-receiving aperture is positioned to lie between the at least one first elongated strap-receiving slot and the at least one second elongated strap-receiving slot upon mating engagement of the latching post and the second plate.
